# EUROPEAN PATENT SPECIFICATION

(11) **EP 3 024 243 B1**
(45) Date of publication and mention of the grant of the patent: **02.08.2017**
(21) Application number: 15201979.0
(22) Date of filing: 15.04.2013
(51) Int. Cl.: H04N 19/70, H04N 19/46, H04N 19/436

(54) **FIXED TILE STRUCTURE FLAG INDICATING PARALLEL PROCESSING POSSIBILITY FOR A SEQUENCE OF COMPRESSED VIDEO**
FLAG MIT FESTER KACHELSTRUKTUR ZUR ANZEIGE EINER PARALLELVERARBEITUNGSMÖGLICHKEIT EINER SEQUENZ VON KOMPRIMIERTEN VIDEODATEN
DRAPEAU DE STRUCTURE DE TUILE FIXE INDIQUANT UNE POSSIBILITÉ DE TRAITEMENT PARALLÈLE POUR UNE SÉQUENCE DE VIDÉO COMPRESSÉE

(30) Priority: 16.04.2012 US 201261624480 P
(43) Date of publication of application: 25.05.2016
(62) Divisional of application: 13723266.6
(73) Proprietor: Telefonaktiebolaget LM Ericsson (publ), 164 83 Stockholm (SE)
(72) Inventor: Sjöberg, Rickard, 113 62 STOCKHOLM (SE); Samuelsson, Jonatan, 112 50 STOCKHOLM (SE); Enhorn, Jack, 164 43 KISTA (SE)
(74) Representative: Ericsson

(56) References cited:
- SJÃBERG R ET AL: "AHG4: Enabling decoder parallelism with tiles", 9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-I0233, 17 April 2012 (2012-04-17), XP030111996,
- NAKAGAMI O ET AL: "AHG4: Bitstream restriction flag to enable tile split", 9. JCT-VC MEETING; 100. MPEG MEETING; 27-4-2012 - 7-5-2012; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-I0056, 16 April 2012 (2012-04-16), XP030111819,
- SASAI H ET AL: "Constrained Tile for parallel decoding", 8. JCT-VC MEETING; 99. MPEG MEETING; 1-2-2012 - 10-2-2012; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-H0345, 20 January 2012 (2012-01-20), XP030111372,
- HOROWITZ M: "JCT-VC BoG report: tiles and wavefront parallel processing", 8. JCT-VC MEETING; 99. MPEG MEETING; 1-2-2012 - 10-2-2012; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-H0727, 5 February 2012 (2012-02-05), XP030111754,

## Description

### Technical Field

The embodiments relate to a transmitter for processing video. In particular, the embodiments relate to a solution for enabling parallel decoding.

### Background

High Efficiency Video Coding (HEVC) is a video coding standard being developed in Joint Collaborative Team - Video Coding (JCT-VC). JCT-VC is a collaborative project between Moving Picture Experts Group (MPEG) and International Telecommunication Union - Telecommunication Strandardization Sector (ITU-T). Currently, an HEVC Model (HM) is defined that includes a number of tools and is considerably more efficient than H.264/Advanced Video Coding (AVC).

HEVC and H.264 both uses a context adaptive binary arithmetic coder (CABAC) but HEVC uses treeblocks of size up to 64x64 pixels instead of H.264's macroblocks of 16x16 pixels. I.e. in HEVC a picture is divided into treeblocks having a size up to 64x64 pixels.

Both HEVC and H.264 defines a video usability information (VUI) syntax structure, that can be present in a sequence parameter set and contains parameters that do not affect the decoding process, i.e. do not affect the pixel values. Supplemental Enhancement Information (SEI) is another structure that can be present in any access unit and that contains information that does not affect the decoding process.

Compared to H.264/AVC, HEVC provides better possibilities for parallelization. Parallelization implies that a single picture can be encoded and decoded in parallel. Specifically Tiles and Wavefront Parallel Process (WPP) are tools developed for parallelization purposes. Both were originally designed for encoder parallelization but they may also be used for decoder parallelization.

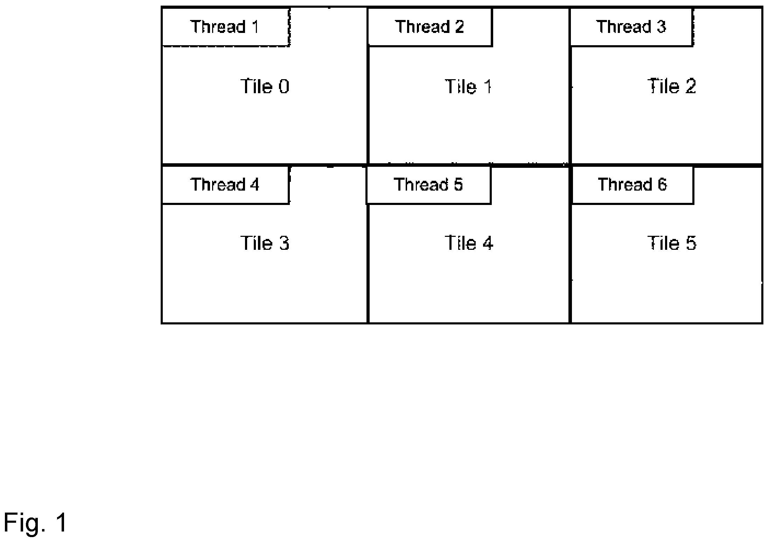

A picture frame (referred to as frame) can in the draft HEVC standard be divided into a number of tiles which may allow the same number of threads to encode/decode the frame in parallel. This is exemplified in figure 1, where a frame is divided into six tiles and may therefore allow six threads to encode/decode the frame in parallel.

Accordingly, in this context, that a number of threads can be used, implies that the actual workload of the encoding/decoding process can be divided into separate "processes" that are performed independently of each other, i.e. they can be performed in parallel in separate threads.

The tiles in HEVC divide a picture into areas with a defined width and height. Each area consists of an integer number of treeblocks that are processed in raster scan order. The tiles themselves are processed in raster scan order throughout the picture. The exact tile configuration or tile info (number of tiles, width and height of each tile etc) can be signaled in a sequence parameter set (SPS) and in a picture parameter set (PPS). The tile info contains the width, height and position of each tile in a picture, see the syntax table below. This means that if the coordinates of a block is known, it is also known what tile the block belongs to. If tile info is present both in PPS and SPS the info from PPS may be used.

**Table 1 - Tile info syntax table**

| | |
|---|---|
| **tiles_or_entropy_coding_sync_idc** | u(2) |
| if( tiles_or_entropy_coding_sync_idc = = 1 ) { | |
| **num_tile_columns_minus1** | ue(v) |
| **num_tile_rows_minus1** | ue(v) |
| **uniform_spacing_flag** | u(1) |
| if( !uniform_spacing_flag ) { | |
| for( i = 0; i < num_tile_columns_minus1; i++ ) | |
| **column**_**width**[ **i** ] | ue(v) |
| for( i = 0; i < num_tile_rows_minus1; i++ ) | |
| **row_height[ i ]** | ue(v) |
| } | |
| **loop_filter_across_tiles_enabled_flag** | u(1) |
| } | |

A codeword or syntax element that consists of a single bit is referred to as a flag.

HEVC defines two types of entry points for parallel decoding. Entry points can be used by a decoder to find the position in the bitstream where the bits for a tile or substream starts. The first type is entry points offsets. Those are listed in the slice header and indicates starting points of one or more tiles that are contained in the slice. The second type is entry point markers which separates tiles in the bitstream. An entry point marker is a specific codeword (start code) which cannot occur anywhere else in the bitstream.

Tiles can be used for encoder parallelism. For the tiles case, the encoder first chooses a tile partitioning. Since tile boundaries break all predictions between the tiles, the encoder can assign the encoding of multiple tiles to multiple threads. As soon as there are at least two tiles, multiple thread encoding can be done.

For decoder parallelism to work, there needs to be entry points in the bitstream. For parallel encoding, there does not need to be entry points, the encoder can just stitch the bitstream together after the encoding of the tiles/substreams are complete. However, the decoder needs to know where each tile starts in the bitstream in order to decode in parallel. If an encoder only wants to encode in parallel but does not want to enable parallel decoding, it could omit the entry points, but if it also wants to enable decoding in parallel it must insert entry points.

### Summary

An object of the embodiments is to provide an alternative mechanism for decoder parallelism.

That is achieved by sending information indicating that the same tile structure is used throughout a sequence.

According to a first aspect of embodiments of the present invention, a transmitter comprising an encoder for encoding a sequence of pictures of a video stream of multiple pictures is provided. The encoder comprises a determining unit configured to decide whether all the pictures in said sequence are divided in the same way by tiles using a tile structure, and an output unit configured to send information of the tile structure which the current pictures is divided in, and to send information that the same tile structure is used for all pictures throughout the sequence of the video stream when the same tile structure is used for all pictures throughout the sequence of the video stream.

An advantage with embodiments is that the requirement on the decoder complexity can be reduced if the decoder can receive information that guarantees that the same tile structure will be used throughout a sequence.

### Brief Description of the Drawings

**Figure 1** illustrates a frame divided into six tiles that may allow six threads to encode/decode the frame in parallel.
**Figure 2** is a flowchart illustrating a method performed in an encoder according to embodiments of the present invention.
**Figure 3** is a flowchart illustrating a method performed in a decoder according to embodiments of the present invention.
**Figure 4** illustrates schematically an encoder and a decoder according to the embodiments of the present invention.
**Figure 5** exemplifies a transmitter with an encoder according to the embodiments and a receiver with a decoder according to embodiments.
**Figure 6** illustrates schematically a computer program and a computer program product according to embodiments of the present invention.

### Detailed description

The embodiments of the present invention relates to video coding processes that allows parallel decoding of a picture frame.

In an HEVC encoded video sequence each picture can contain means for decoding different parts of a picture frame in parallel using tiles or similar means.

Hence, as soon as there are at least two tiles, multiple threads can be used for decoding if it is known where in the bitstream where the second tile starts, i.e. that there is an entry point for the second tile.

The parameter tiles_or_entropy_sync_idc=1 indicates that tile info is available. Examples of tile info are number of tiles, their position and size, the syntax in SPS looks like this:

| | |
|---|---|
| **tiles_or_entropy_coding_sync_idc** | u(2) |
| if( tiles_or_entropy_coding_sync_idc = = 1 ) { | |
| **num_tile_columns_minus1** | ue(v) |
| **num_tile_rows_minus1** | ue(v) |
| **uniform_spacing_flag** | u(1) |
| if( !uniform_spacing_flag ) { | |
| for( i = 0; i < num_tile_columns_minus1; i++ ) | |
| **column**_**width**[ **i** ] | ue(v) |
| for( i = 0; i < num_tile_rows_minus1; i++ ) | |
| **row_height**[ **i** ] | ue(v) |
| } | |
| **loop_filter_across_tiles_enabled_flag** | u(1) |
| } | |

tiles_or_entropy_sync_idc=1 may mean that multiple threads can be used, always at the encoder, and at the decoder if there are entry points.

In this context when we say that multiple threads can be used we mean that the actual workload of the decoding process can be divided into separate "processes" that are performed independent of each other, i.e. they can be performed in parallel (in separate threads).

In one embodiment a syntax element is used to indicate if the tile information is the same for a sequence. The sequence is typically a bitstream for which one sequence parameter set (SPS) is valid. The syntax element can be part of the SPS or signaled such as in VUI or in an SEI message. Furthermore, the syntax element can be a flag, for example denoted tiles_fixed_structure_flag.

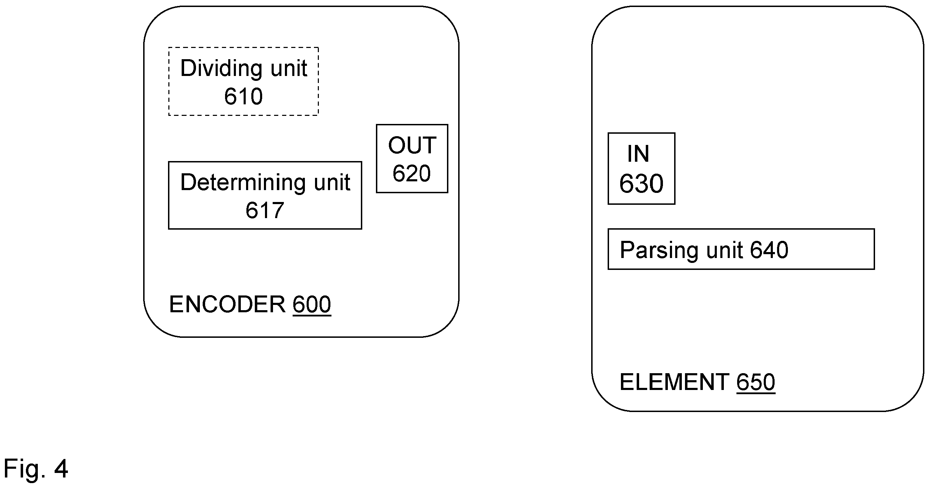

The encoder decides how the pictures are divided by a tile structure enabling parallel encoding/decoding. When the same tile structure is used throughout a sequence, information that the same tile structure is used throughout a sequence of the video stream is sent to the decoder according to this embodiment. Further, the encoder divides (e.g. by a dividing unit 610 as illustrated in **figure 4**) the pictures according to the tile structure enabling parallel encoding/decoding and may send information of the tile structure in which the current pictures are divided in in one or more PPS, e.g. in-band.

Thus, when the syntax element indicates that the tile information will be the same for a sequence, the tile structure is the same for all pictures in the sequence and a decoder, receiver or other data forwarding or processing element would know from the syntax element that every picture in the sequence have the same tile partitions and what those partitions looks like. The information of the actual tile structure can be sent in the SPS or in the PPS. Thereby, the complexity of the decoder, receiver or other data forwarding or processing element can be reduced.

Consequently, an element, which can be a network element or an element of a decoder, is according to this embodiment configured to perform the following.
1. The element receives a slice and parses syntax elements in the slice header to deduce if the tile structure is the same for all pictures in the sequence. The slice header may contain a PPS index which refers to the PPS where the tile info can be found. Another option is that the element looks directly at the SPS and PPS for the flag and the tile info respectively.
2. If the syntax element indicates that the tile structure is the same for all pictures in the sequence, the element uses this information for deciding on decoding of the sequence. An advantage with this solution is that a decoder can make a better decision whether it will be able to decode the received sequence if this information is available. If the decoder doesn't know that the tile structure is the same for all pictures in the sequence, it may not be able to guarantee that it can decode the sequence, e.g. due to limitations of the decoder processor.

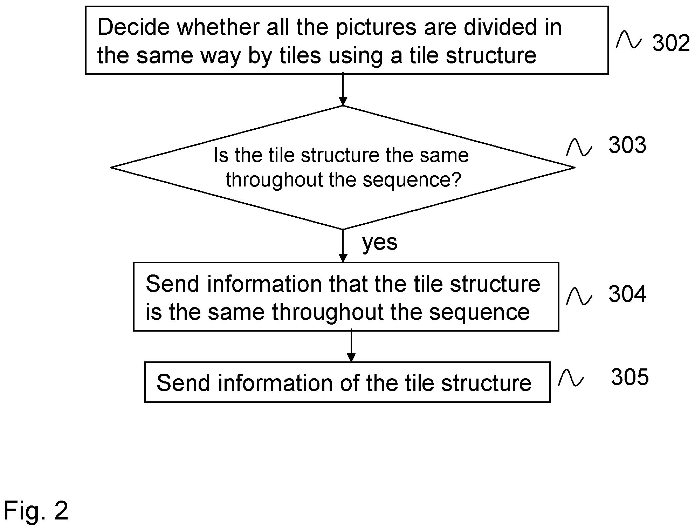

The proposed method to be performed by the encoder is illustrated in the flowchart of **figure 2**. The method is adapted for encoding a sequence of pictures of a video stream of multiple pictures. In the method, it is decided 302 whether all the pictures in said sequence are divided in the same way by tiles using a tile structure, and information that the same tile structure is used throughout the sequence of the video stream is sent 304 when the same tile structure is used 303 throughout the sequence of the video stream. Information of the tile structure that is being used may also be sent 305 in one or more PPS e.g. in-band.

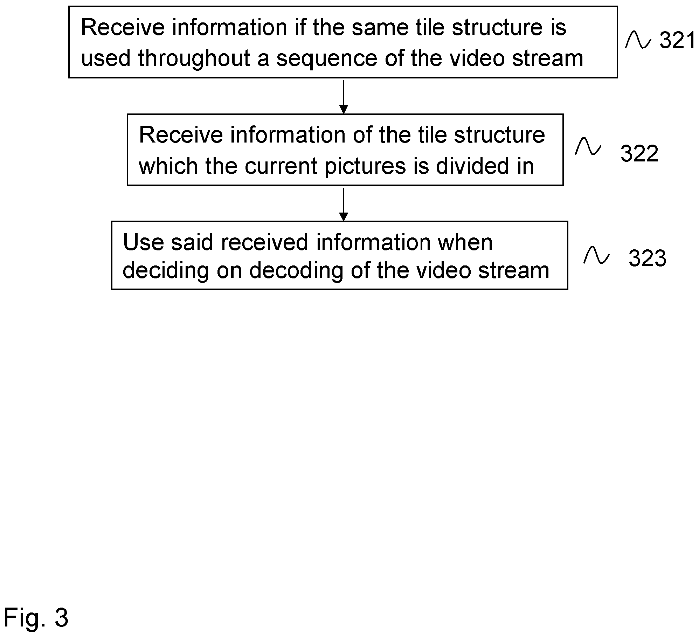

According to a further aspect a method for parsing a sequence of pictures of a video stream of multiple pictures is provided as illustrated in **figure 3**. In the method, information if the same tile structure is used throughout a sequence of the video stream is received 321, and information of the tile structure is received 322. Further, said received information can be used 323 when deciding on decoding of the sequence of the video stream.

According to one embodiment, the information that the same tile structure is used throughout the sequence of the video stream is sent in a flag exemplified by a syntax element tiles_fixed_structure_flag. The flag can be sent in a SPS from the encoder to a decoder.

This means that there are three possibilities according to the embodiments: 1) The flag is not present and no information regarding if the same tile structure is used throughout the sequence is provided. 2) The flag is present and set to a specific value e.g. 1, the same tile structure is used throughout the sequence. 3) The flag is present and set to a specific value e.g. 0, no information regarding if the same tile structure is used throughout the sequence is provided.

It should be noted that the information that the tile structure is constant throughout the whole sequence (e.g. by the tiles_fixed_structure_flag in the SPS) can be used together with one or more of the alternatives 5-13 as described below.

One example of using the information that the tile structure is constant throughout the whole sequence together with the alternatives 5-13 (described below) is to have only a single syntax element for representing that the tile structure is constant throughout the sequence and that entry points are used for each tile. Additionally there could be another syntax element, preferably conditioned on the first, representing which type of entry points, e.g. offsets or markers.

Alternatively there could be a single syntax element for representing that the tile structure is constant throughout the sequence and that entry point offsets are used for each tile. Alternatively or additionally, there could be a single syntax element for representing that the tile structure is constant throughout the sequence and that entry point markers are used for each tile.

With reference to **figure 4**, according to one aspect an encoder 600 for encoding a sequence of pictures of a video stream of multiple pictures is provided. The encoder comprises a determining unit 617 configured to decide whether all the pictures in said sequence are divided in the same way by tiles using a tile structure, and an output unit 620 configured to send information of the tile structure which the current pictures is divided in, and to send information that the same tile structure is used throughout the sequence of the video stream when the same tile structure is used throughout the sequence of the video stream.

In accordance with embodiment, the output unit of the encoder is configured to send the information that the same tile structure is used throughout the sequence of the video stream in a flag such as a syntax element tiles_fixed_structure_flag.

The output unit of the encoder may be configured to send the syntax element in a sequence parameter set, SPS.

According to a further embodiment, the output unit 620 is further configured to send information that the same tile structure is used throughout a sequence of the video stream during a session set-up.

Moreover, the encoder may be an HEVC encoder, although the embodiments are not limited to HEVC.

Furthermore according to another aspect, an element 650 for parsing a sequence of pictures of a video stream of multiple pictures is provided. The element 650 comprises an input unit 630 configured to receive information of the tile structure which the current pictures is divided in, to receive information if the same tile structure is used throughout a sequence of the video stream and a parsing unit 640 configured to parse and use said received information when deciding on decoding of the sequence of the video stream.

In accordance with an embodiment, the input unit 630 of the element is configured to receive the information that the same tile structure is used throughout a sequence of the video stream from a flag such as a syntax element tiles_fixed_structure_flag.

According to a further embodiment, the input unit 630 is further configured to send information that the same tile structure is used throughout a sequence of the video stream during a session set-up.

The input unit 630 of the element may be configured to receive the syntax element in a sequence parameter set, SPS.

Moreover, the element can be implemented in a network element or a decoder such as an HEVC decoder, although the embodiments are not limited to HEVC.

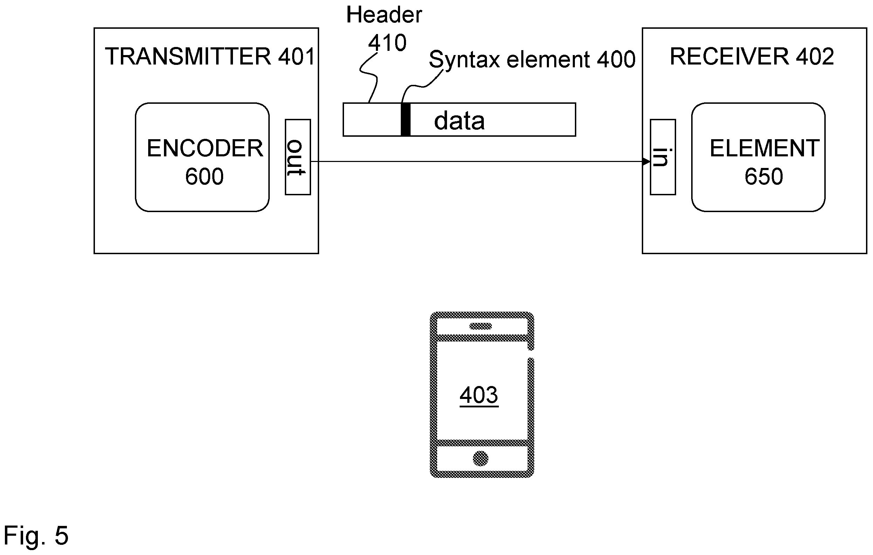

**Figure 5** illustrates schematically a transmitter 401 comprising an encoder 600 in accordance with the embodiments above and a receiver 402 comprising an element 650 in accordance with the embodiments above. It is shown that a syntax element 400 indicating if the same tile structure is used throughout a sequence of the video stream is sent from the transmitter to the receiver. As mentioned above, the syntax element can be sent in a SPS of a header 410.

The encoder may for example be located in a transmitter in a video camera 403 in e.g. a mobile device. The element may for example be located in a receiver in a video camera 403 or any other device for displaying a video stream.

As mentioned above, the embodiments can be implemented in an encoder and any element that operates on a bitstream such as a decoder, or a network element such as a network-node or a Media Aware Element. Thus the decoder and the network element (exemplified by the network-node or a Media Aware Element) are configured to receive and parse syntax element indicative if a sequence has the same tile structure throughout the sequence. The syntax element can be located in the slice header. Further, an encoder and any element that operates on a bitstream such as a decoder, a network-node or a Media Aware Element is configured add syntax for indicating if a sequence has the same tile structure throughout the sequence. The syntax element may be inserted in the VUI in the SPS and sent by the output unit.

Further, the functionalities of the encoder and the element can be implemented by a respective computer with a respective processor and a memory, wherein the memory stores software code portions that can be executed by the processor to perform said functionalities.

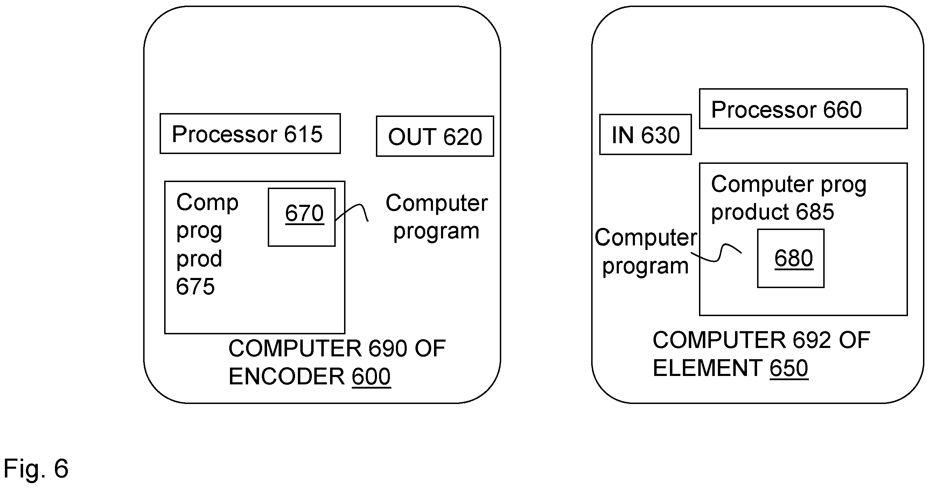

Furthermore the computers 690, 692 in **figure 6**, respectively comprises at least one computer program product 675,680 in the form of a non-volatile memory or volatile memory, e.g. an EEPROM (Electrically Erasable Programmable Read-Only Memory), a flash memory, a disk drive or a RAM (Random-Access Memory). The computer program products 675, 685, respectively comprise a computer program 670, 680.

The computer program 670 of the encoder, comprising computer readable code units which when run on a processor 615 causes the processor 615 to:
- decide whether all the pictures in said sequence are divided in the same way by tiles using a tile structure, and
- send information that the same tile structure is used throughout the sequence of the video stream when the same tile structure is used throughout the sequence of the video stream.

The computer program product 675, comprising computer readable medium and a computer program 670, as stated above, stored on the computer readable medium.

A computer program 680 of the element comprising computer readable code units which when run on a processor 660 causes the processor 660 to:
- receive information whether the same tile structure is used throughout a sequence of the video stream,
- receive information of the tile structure which the current pictures is divided in and
- use said received information when deciding on decoding of the sequence of the video stream.

The computer program product 685, comprising computer readable medium and a computer program 680, as stated above, stored on the computer readable medium.

According to a further embodiment, the entry points are signaled relative to each other. For example, the entry_point_offset syntax element is replaced by an entry_point_delta_offset_minus1 (alternative name is substream_length_minus1).

That implies that the output unit 620 (of the encoder) may be further configured to signal entry points relative to each other, wherein the entry points indicate the first byte of the respective tile. Further, the input unit 630, of the element 650, may be further configured to receive information of entry points relative to each other, wherein the entry points indicate the first byte of the respective tile.

Thus, the entry_point_delta_offset_minus1[0] plus 1 may be defined to indicate the first entry point relative the start of the slice header (EntryPoint[0] = entry_point_delta_offset_minus1[0] + 1). Each entry_point_delta_offset_minus1 [i] for i > 0 is used to calculate the i'th entry point relative the start of the slice header as EntryPoint[i] = EntryPoint[i-1] + entry_point_delta_offset_minus1[i] + 1.

Or equivalently, the entry_point_delta_offset_minus1[0] plus 1 is defined to indicate the first entry point relative the start of the slice header. Each entry_point_delta_offset_minus1[i] for i > 0 is used to calculate the i'th entry point relative the previous entry point + 1.

In this alternative, the decoder is configured to perform the following:
1. The decoder receives a slice and parses syntax elements in the slice header to deduce which PPS is active and which SPS is active, and whether tiles are used or not.
2. If tiles are used and num_entry_point_offsets > 0 the following is performed:
   the first entry point is calculated as EntryPoint[0] = entry_point_delta_offset_minus1[i] + 1
   for each i in the range from 1 to entry_point_offset-1, inclusive the i'th entry point is calculated as EntryPoint[i] = EntryPoint[i-1] + entry_point_delta_offset_minus1[i] + 1.
4. The slice is decoded using the tile configuration deduced in step 2. Optionally the decoder uses the entry points decoded in step 2 to divide the workload of decoding on multiple cores (threads).

The syntax could for example look like this:

| | |
|---|---|
| if( tiles_or_entropy_coding_sync_idc > 0 ) { | |
| **num_entry_point_offsets** | ue(v) |
| if( num_entry_point_offsets > 0 ) { | |
| **offset_len_minus1** | ue(v) |
| for( i = 0; i < num_entry_point_offsets; i++ ) { | |
| **entry**_**point**_**delta**_**offset**_**minus1**[ **i** ] | u(v) |
| } | |

The semantics could for example look like this:
**entry_point_offset[ i** ] specifies the i-th entry point offset, in bytes and shall be represented by offset_len_minus1 plus 1 bits.

The variable EntryPoint[ i ] is derived as follows.

```
 if(i = = 0)
 EntryPoint[ i ] = entry_point_offset[ i ] + 1
 else
 EntryPoint[ i ] = EntryPoint[ i - 1 ] + (entry_point_offset[ i ] + 1 )
```

An advantage with this embodiment is that fewer bits can be used for the signaling of the entry points since the entry point offset relative to the previous offset is generally a much smaller number than the entry point offset relative to the start of the slice thus it can be represented by fewer bits. Another advantage is that there is an inherent requirement that the entry point offsets are signaled in increasing order (since negative offsets are not allowed). If entry point offsets are signaled relative the slice header there is no inherent requirement on the order of the entry point offsets and thus such a requirement must be explicitly stated in order to prohibit unordered signaling of entry point which would be complex for a decoder to handle.

### Alternative 2

In a further alternative, the use of tiles is signaled for a video sequence in a data structure such as a SPS or another data structure. This data structure may or may not be sent out-of-band during session set-up, for instance for a video conference or telephony call or streaming session. The data structure contains a number of modes on how tiles are used within the video sequence.

In this alternative, a first mode may indicate signal that tiles are used and that one and only one specific tile structure is used throughout the sequence.

Moreover, a second mode may indicate/signal that tiles are not used, a third mode may indicate that in addition to the first mode, the actual tile structure to use is indicated together with the mode and conveyed during session set-up. A forth mode may indicate that there are tiles in the sequence but that the structure may or may not be fixed and a fifth mode may indicate that in addition to the second, third or fourth mode, there are no entry points in the sequence.

One sixth mode may indicate that in addition to the first, third or fourth mode, there are entry point offsets for all tiles in the sequence, except tiles that are first in their slice and a seventh mode may indicate that in addition to the first, third or fourth mode, there are entry point markers for all tiles in the sequence, except tiles that are first in their slice.

An eighth mode may indicate that in addition to the first, third or fourth mode, there are entry point markers or entry point offsets for all tiles in the sequence, except tiles that are first in their slice.

These modes are represented in alternatives 3 to 14, and may be combined with the above descriptions. The syntax may allow for a subset of these modes to be signaled. An encoder may be configured to signal a subset of these modes and a decoder may be configured decode (and possibly make use of the information from) a subset of theses modes.

### Alternative 3

According to a further alternative a syntax element in the SPS indicates that each picture in the sequence will use the same number of WPP substreams. Preferably the number of WPP substreams is indicated in the SPS and cannot be overridden (by a value in PPS, slice header or elsewhere). Alternatively, there is a restriction that all indications of the number of WPP substreams (for example in the PPS) must have the same value.

### Alternative 4

In one alternative the restriction on the tile configuration from alternatives 1 and 2 is combined with the restriction on WPP substreams from embodiment 3 and is preferably combined into a single syntax element indicating that the configuration for the parallelization tool (tiles or wavefront) is constant throughout the sequence.

### Alternative 5

In this alternative the encoder is further configured to, e.g. by using the output unit, signal if all tiles that do not start a new slice are indicated by an entry point offset in the slice header.

Such a signaling can be realized by a flag in SPS, VUI, PPS, SEI or any other appropriate data structure (e.g. a tile info structure that can be present in SPS and/or PPS). When the flag is present it shall be valid for all slices for which the data structure is active. E.g. all slices in all pictures in a sequence if the flag is present in the SPS, or all slices in all pictures that reference the PPS if the flag is present in the PPS etc.

Accordingly, the decoder may be further configured to decide on the number of parallel decoding threads to perform decoding in. The decoder is guaranteed that the number of entry points (including the starting point of slices) is equal to the number of tiles of the picture.

If the flag is set, an encoder must include an entry point offset for each tile that do not start a new slice, in all slices for which the data structure in which the flag is active (e.g. all slices in all pictures in a sequence if the flag is present in the SPS, or all slices in all pictures that reference the PPS if the flag is present in the PPS etc). If the flag is not set an encoder may or may not include an entry point offset for each tile that does not start a new slice. Alternatively, when the flag is not set, there are no entry point offsets and the encoder does not include entry point offsets for the tiles that are within the scope of the flag.

In one version of this alternative the decoder divides the work load on the number of available processing cores such that each core is assigned approximately equal number of tiles. Alternatively, the decoder starts a new thread for each tile.

The flag could for example be named entry_point_offsets_for_all_tiles_flag.

### Alternative 6

In this alternative the encoder is further configured to, e.g. by using the output unit, signal if all tiles that do not start a new slice are indicated by an entry point marker in the bitstream. The entry point marker is in the bitstream present before each tile except for the first tile in each slice.

Signaling that entry point markers are present for every tile except the first tile in the slice can be realized by a flag in SPS, VUI, PPS, SEI or any other appropriate data structure (e.g. a tile info structure that can be present in SPS and/or PPS).

When the flag is present it may be valid for all slices for which the data structure is active (e.g. all pictures in a sequence if the flag is present in the SPS).

Accordingly the decoder may be further configured to decide on the number of parallel decoding threads to perform decoding in. The decoder is guaranteed that the number of entry points (including the starting point of slices) is equal to the number of tiles of the picture.

If the flag is set, an encoder must include an entry point marker for each tile, except the first tile in a slice, in all slices for which the data structure in which the flag is active (e.g. all slices in all pictures in a sequence if the flag is present in the SPS, or all slices in all pictures that reference the PPS if the flag is present in the PPS etc). If the flag is not set an encoder may or may not include an entry point marker for each tile that does not start a new slice. Alternatively, when the flag is not set, there are no markers and the encoder shall not include entry point markers for the tiles that are within the scope of the flag.

In one version of this alternative the decoder divides the work load on the number of available processing cores such that each core is assigned approximately equal number of tiles. Alternatively, the decoder starts a new thread for each tile.

The flag could for example be named entry_point_markers_for_all_tiles_flag.

### Alternative 7

In another alternative, the above mentioned flags are combined into one single flag e.g. denoted entry_points_for_all_tiles_flag. With this flag the encoder is configured to signal if all tiles that do not start a new slice are indicated by an entry point marker in the bitstream or by an entry point offset in the slice header. Alternatively, this flag indicates that all tile start points are indicated, the indication is done with either entry point marker or entry point offset or both entry point marker and entry point offset.

Such a signaling can be realized by a flag in SPS, VUI, PPS, SEI or any other appropriate data structure (e.g. a tile info structure that can be present in SPS and/or PPS).

When the flag is present, the flag may be valid for all slices for which the data structure is active (e.g. all pictures in a sequence if present in the SPS).

Accordingly, the decoder may be further configured to decide on the number of parallel decoding threads to perform decoding in. The decoder is guaranteed that the number of entry points (including the starting point of slices) is equal to the number of tiles of the picture.

If the flag is set, an encoder must include an entry point marker or an entry point offset for each tile, except the first tile in a slice, in all slices for which the data structure in which the flag is active (e.g. all slices in all pictures in a sequence if present in the SPS, all slices in all pictures that reference the PPS if present in the PPS etc). If the flag is not set an encoder may or may not include an entry point marker or an entry point offset for each tile that does not start a new slice. Alternatively, when the flag is not set, there are no markers nor offsets and the encoder shall not include entry point markers nor offsets for the tiles that are within the scope of the flag.

In one version of this alternative the decoder divides the work load on the number of available processing cores such that each core is assigned approximately equal number of tiles. Alternatively, the decoder starts a new thread for each tile.

### Alternative 8

As an alternative, the flag from alternative 7 could be used together with an additional flag: entry_point_type_flag.

If entry_points_for_all_tiles_flag signals that all tiles that do not start a new slice are indicated by an entry point marker in the bitstream or by an entry point offset in the slice header, this second flag (entry_point_type_flag) indicates if the entry points are signaled as offsets or as markers.

A decoder and an encoder, respectively can use this information as described in alternative 7.

### Alternative 9

According to a further alternative, a syntax element representing an ID of a tile (tile_id_offset) is sent for each entry_point offset so that a decoder knows which tile the entry point offset corresponds to. Accordingly, the encoder is configured to insert the syntax element in the slice header and to send it to the decoder.

The decoder is thus configured to divide the workload of decoding to multiple threads (cores). Each thread will know what tile the entry point corresponds to and can thus perform correct decoding of the tile.

In this alternative, the decoder is further configured to perform the following:.
1. The decoder receives a slice and parses syntax elements in the slice header to deduce which PPS is active and which SPS is active.
2. The decoder parses the bitstream and finds out how many entry point offsets there are in the slice. The following is performed for each entry point:
   The tile ID syntax element is parsed, and is optionally used to calculate tile ID for the entry point.
   The tile ID is optionally used together with the tile info to determine the position of the tile in the picture so that the tile can be independently decoded.
3. The slice is decoded using the tile configuration deduced in step 2. Optionally the decoder uses the tile IDs decoded in step 2 to divide the workload of decoding on multiple cores (threads).

In one version of the alternative the value that is signaled is the tile ID minus one since there is no need to be able to signal tile ID 0 (which is the first tile in the picture which always starts a new slice and thus does not need an entry point). The syntax element (codeword) could then be named tile_id_offset_minus1. The syntax element could be coded by a fixed length codeword or a UVLC.

### Alternative 10

As an alternative, the tile ID from alternative 9 is encoded as a difference relative to the previous tile ID in the list using the syntax element tile_id_delta_offset_minus1. The first offset is signaled relative the tile ID of the first tile in the slice.

The decoder is according to this alternative configured to perform the following.
1. The decoder receives a slice and parses syntax elements in the slice header to deduce which PPS is active and which SPS is active.
2. The decoder parses the bitstream and finds out how many entry point offsets there are in the slice. The following is performed for each entry point:
   The tile ID delta syntax element are parsed. The first tile ID is determined by adding the value of the first delta syntax element and the tile ID of the first tile in the slice. All other tile IDs are determined by adding the value of the delta syntax element and the tile ID of the previous tile. Alternatively, the first tile ID is determined by adding the value of the first delta syntax element and the tile ID of the first tile in the slice plus 1. All other tile IDs are determined by adding the value of the delta syntax element and the tile ID of the previous tile plus 1.
   The tile ID is optionally used together with the tile info to determine the position of the tile in the picture so that the tile can be independently decoded.
3. The slice is decoded using the tile configuration deduced in step 2. Optionally the decoder uses the tile IDs decoded in step 2 to divide the workload of decoding on multiple cores (threads).

### Alternative 11

As a further alternative, the tile ID from alternative 9 or 10 is conditioned on the entry_point_offsets_for_all_tiles_flag from alternative 5. If all entry points are signaled there is no need to signal the tile ID since it can be correctly calculated as the tile ID of the previous entry point offset + 1.

In this case, the decoder is configured to perform the following:
1. The decoder receives a slice and parses syntax elements in the slice header to deduce which PPS is active and which SPS is active.
2. If the SPS indicates that multiple tiles are used (for example signaled by the codeword tiles_or_entropy_sync_idc) the following is performed:
   a. if num_entry_point_offsets in the slice header is greater than 0 the following is performed for each i in the range from 0 to num_entry_point offsets-1, inclusive:
      i. if entry_point_offsets_for_all_tiles_flag in the SPS is equal to 0 the tile_id_offset_minus1 syntax element is parsed, and is optionally used to calculate tile ID for the entry point.
      ii. else, optionally, tile ID for entry point i is calculated as tile ID of entry point(i-1) plus one (except for i = 0 for which tile ID is calculated as the tile ID of the first tile in the slice plus one).
3. else tiles are not used.
4. The slice is decoded using the tile configuration deduced in step 2 or 3. Optionally the decoder uses the tile IDs decoded in step i and ii to divide the workload of decoding on multiple cores (threads).

### Alternative 12

As a yet further alternative, tile ID syntax element (tile_id_marker_minus1) present in the slice data that follows an entry point marker is conditioned on the
entry_point_marker_for_all_tiles_flag from alternative 6. If all entry points are signaled there is no need to signal the tile ID since it can be correctly calculated as the tile ID of the previous entry point marker + 1.

In this case, the decoder is configured to perform the following:.
1. The decoder receives a slice and parses syntax elements in the slice header to deduce which PPS is active and which SPS is active.
2. If the SPS indicates that multiple tiles are used (for example signaled by the codeword tiles_or_entropy_sync_idc) the following is performed:
   a. the decoder scans through the NAL data to find the occurrences of the entry point markers (startcodes, entry_point_marker_two_3bytes).
   b. if entry_point_offsets_for_all_tiles_flag in the SPS is equal to 0 the tile_id_marker_minus1 syntax element is parsed and is optionally used to calculate the tile ID of the entry point.
   c. else, optionally, a counter is used to count the number of entry point markers in the slice and tile ID for each entry point is calculated as tile ID of the first tile in the slice plus the value of the counter after reaching the entry point (during scanning).
3. else tiles are not used.
4. The slice is decoded using the tile configuration deduced in step 2 or 3. Optionally the decoder uses the tile IDs decoded in step b and c to divide the workload of decoding on multiple cores (threads).

### Alternative 13

In yet a further alternative, the tile ID from alternative 9 or 10 is conditioned on the entry_points_for_all_tiles_flag from alternative 7. If all entry points are signaled there is no need to signal the tile ID since it can be correctly calculated as the tile ID of the previous entry point + 1.

In this case, the decoder is configured to perform the following:
1. The decoder receives a slice and parses syntax elements in the slice header to deduce which PPS is active and which SPS is active.
2. If the SPS indicates that multiple tiles are used (for example signaled by the codeword tiles_or_entropy_sync_idc) the following is performed:
   a. if num_entry_point_offsets in the slice header is greater than 0 the following is performed for each i in the range from 0 to num_entry_point_offsets-1, inclusive:
      i. if entry_point_for_all_tiles_flag in the SPS is equal to 0 the tile_id_offset_minus1 syntax element is parsed, and is optionally used to calculate tile ID for the entry point.
      ii. else, optionally, tile ID for entry point i is calculated as tile ID of entry point(i-1) plus one (except for i = 0 for which tile ID is calculated as the tile ID of the first tile in the slice plus one).
3. else tiles are not used.
4. The slice is decoded using the tile configuration deduced in step 2 or 3. Optionally the decoder uses the tile IDs decoded in step i and ii to divide the workload of decoding on multiple cores (threads).

The embodiments presented above are focused on tiles but the tiles can also be replaced with wavefronts and the tile ID can be replaced by substream id still within the scope of the embodiments of the present invention.

Further, tiles_fixed_structure_flag is used throughout the specification to indicate to the decoder that the tile structure is kept constant throughout a sequence. However, this flag is just an example how to signal that the tile structure is kept constant. Hence, the name tiles_fixed_structured_flag, its values and its position in the bitstream are intended as an example. It is one exemplary embodiment but it is evident to anyone skilled in the art that each embodiment is applicable to any means of signaling that the tile structure is kept constant.

## Claims

1. A transmitter (401) comprising an encoder (600) for encoding a sequence of pictures of a video stream of multiple pictures, the encoder comprises a determining unit (617) configured to decide whether all the pictures in said sequence are divided in the same way by tiles using a tile structure, and an output unit (620) configured to send information of the tile structure which the current pictures is divided in, and to send information that the same tile structure is used for all pictures throughout the sequence of the video stream when the same tile structure is used for all pictures throughout the sequence of the video stream.

2. The transmitter according to claim 1, wherein the output unit (620) of the encoder is configured to send the information that the same tile structure is used for all pictures throughout the sequence of the video stream in a syntax element tiles_fixed_structure_flag.

3. The transmitter according to claim 2, wherein the output unit (620) of the encoder is configured to send the syntax element in a sequence parameter set, SPS.

4. The transmitter according to any of claims 1-3, wherein the output unit (620) is further configured to send information that the same tile structure is used for all pictures throughout a sequence of the video stream during a session set-up.

5. The transmitter according to any of claims 1-4, wherein the output unit (620) is further configured to signal entry points relative to each other, wherein the entry points indicates the first byte of the respective tile.

6. The transmitter according to any of claims 1-5, wherein the encoder is a High Efficiency Video Coding,HEVC, encoder.

7. The transmitter according to any of claims 1-6, wherein the transmitter is in a video camera (403) in e.g. a mobile device.

## Patentansprüche

1. Sender (401), umfassend einen Kodierer (600) zum Kodieren einer Bildsequenz eines Videostreams mehrerer Bilder, wobei der Kodierer eine Bestimmungseinheit (617), die konfiguriert ist, um zu entscheiden, ob alle Bilder in der Sequenz auf dieselbe Weise unter Verwendung einer Kachelstruktur in Kacheln aufgeteilt sind, und eine Ausgabeeinheit (620) umfasst, die konfiguriert ist, um Informationen der Kachelstruktur, in welche die aktuellen Bilder aufgeteilt sind, zu senden, und Informationen, dass dieselbe Kachelstruktur für alle Bilder in der gesamten Videostreamsequenz verwendet wird, wenn dieselbe Kachelstruktur für alle Bilder in der gesamten Videostreamsequenz verwendet wird, zu senden.

2. Sender nach Anspruch 1, wobei die Ausgabeeinheit (620) des Kodierers konfiguriert ist, um die Informationen, dass dieselbe Kachelstruktur für alle Bilder in der gesamten Videostreamsequenz verwendet wird, in einem Syntaxelement tiles_fixed_structure_flag zu senden.

3. Sender nach Anspruch 2, wobei die Ausgabeeinheit (620) des Kodierers konfiguriert ist, um das Syntaxelement in einem Sequenzparametersatz, SPS, zu senden.

4. Sender nach einem der Ansprüche 1-3, wobei die Ausgabeeinheit (620) ferner konfiguriert ist, um Informationen, dass dieselbe Kachelstruktur für alle Bilder in der gesamten Videostreamsequenz verwendet wird, während eines Sitzungsstarts zu senden.

5. Sender nach einem der Ansprüche 1-4, wobei die Ausgabeeinheit (620) ferner konfiguriert ist, um Eingangspunkte relativ zueinander zu signalisieren, wobei die Eingangspunkte das erste Byte der entsprechenden Kachel anzeigen.

6. Sender nach einem der Ansprüche 1-5, wobei der Kodierer ein High-Efficiency-Video-Coding-(HEVC)-Kodierer ist.

7. Sender nach einem der Ansprüche 1-6, wobei sich der Sender in einer Videokamera (403), zum Beispiel in einem Mobilgerät, befindet.

## Revendications

1. Émetteur (401) comprenant un codeur (600) pour coder une séquence d'images d'un flux vidéo de multiples images, le codeur comprend une unité de détermination (617) configurée pour décider si toutes les images dans ladite séquence sont divisées de la même façon par des tuiles à l'aide d'une structure de tuile, et une unité de sortie (620) configurée pour envoyer une information de la structure de tuile dans laquelle les images courantes sont divisées, et pour envoyer une information que la même structure de tuile est utilisée pour toutes les images dans toute la séquence du flux vidéo lorsque la même structure de tuile est utilisée pour toutes les images dans toute la séquence du flux vidéo.

2. Émetteur selon la revendication 1, dans lequel l'unité de sortie (620) du codeur est configurée pour envoyer l'information que la même structure de tuile est utilisée pour toutes les images dans la séquence du flux vidéo dans un élément de syntaxe « tiles_fixed_structure_flag » (drapeau de structure de tuiles fixe).

3. Émetteur selon la revendication 2, dans lequel l'unité de sortie (620) du codeur est configurée pour envoyer l'élément de syntaxe dans un ensemble de paramètres de séquence, SPS.

4. Émetteur selon l'une quelconque des revendications 1 à 3, dans lequel l'unité de sortie (620) est en outre configurée pour envoyer une information que la même structure de tuile est utilisée pour toutes les images dans une séquence du flux vidéo durant une installation de session.

5. Émetteur selon l'une quelconque des revendications 1 à 4, dans lequel l'unité de sortie (620) est en outre configurée pour signaler des points d'entrée relatifs les uns aux autres, dans lequel les points d'entrée indiquent le premier octet de la tuile respective.

6. Émetteur selon l'une quelconque des revendications 1 à 5, dans lequel le codeur est un codeur de type HEVC (codage vidéo de grande efficacité).

7. Émetteur selon l'une quelconque des revendications 1 à 6, dans lequel l'émetteur est dans une caméra vidéo (403) dans, par exemple, un dispositif mobile.
